# EUROPÄISCHE PATENTSCHRIFT

(11) **EP 0 360 132 B1**
(45) Veröffentlichungstag und Bekanntmachung des Hinweises auf die Patenterteilung: **03.03.1993**
(21) Anmeldenummer: 89116849.4
(22) Anmeldetag: 12.09.1989
(51) Int. Cl.: G05G 1/14, B60K 41/16

(54) **Steuereinrichtung zum Verstellen eines Fahrzeuggetriebes**
Control device for changing a vehicle transmission
Appareil de commande d'une transmission de véhicule

(30) Priorität: 17.09.1988 US 254768
(43) Veröffentlichungstag der Anmeldung: 28.03.1990
(73) Patentinhaber: DEERE & COMPANY, Moline, Illinois 61265 (US)
(72) Erfinder: Duncan, Jerry Richard, Bettendorf Iowa 52722 (US); Hunt, Kenneth Edward, Madison Wisconsin 53703 (US); Hayes, Eugene Gary, Beaver Dam Wisconsin 53916 (US)
(74) Vertreter: Feldmann, Bernhard

(56) Entgegenhaltungen:
- GB-A- 1 122 511
- GB-A- 1 341 361
- US-A- 3 868 003
- US-A- 4 245 527
- US-A- 4 759 417

## Beschreibung

Die Erfindung bezieht sich auf eine Steuereinrichtung mit zwei verschwenkbaren Pedalen zum Verstellen eines Fahrzeuggetriebes aus einer Neutrallage, in der die Pedale sich in ihrer Ruhestellung befinden, in eine Antriebsdrehrichtung für Vorwärtsfahrt und in eine Antriebsdrehrichtung für Rückwärtsfahrt, wobei das das Fahrzeuggetriebe in die Drehrichtung für Vorwärtsfahrt schaltende Pedal aus seiner Ruhestellung durch Heruntertreten um eine erste horizontale Welle in Vorwärtsfahrtrichtung von rechts gesehen im Uhrzeigerdrehsinn verschwenkbar ist.

Bei dieser bekannten Steuereinrichtung (US-A-4 759 417) sind beide Pedale auf einer gemeinsamen Welle nebeneinander gelagert, wobei das das Fahrzeuggetriebe in seine Drehrichtung für Vorwärtsfahrt schaltende Pedal einen unterhalb der Welle liegenden Fortsatz und das das Fahrzeuggetriebe in seine Drehrichtung für Rückwärtsfahrt schaltende Getriebe einen oberhalb der Welle liegenden Fortsatz aufweist, die beide über je eine Verbindungsstange mit dem Fahrzeuggetriebe verbunden sind. Bei der Betätigung eines Pedals durch die Bedienungsperson wird dieses Pedal im Uhrzeigerdrehsinn nach unten verschwenkt, während das andere Pedal aus seiner Ruhestellung entgegen dem Uhrzeigerdrehsinn dann nach oben verschwenkt. Die Pedaltretflächen beider Pedale liegen in der Ruhestellung in derselben Ebene, weshalb eine Fehlbedienung nicht ausgeschlossen werden kann.

Andererseits ist es auch nicht mehr neu, bei einer ähnlichen Steuereinrichtung (US-A-4 245 527) ein drittes Pedal vorzusehen, das bei Betätigung entgegen dem Uhrzeigerdrehsinn nach unten verschwenkt und über das die Fahrgeschwindigkeit einstellbar ist. Alle drei Pedale sind auf einer gemeinsamen Welle angeordnet, so daß auch hier Fehlbedienungen nicht auszuschließen sind und bei gewünschter Rückwärtsfahrt irrtümlich das Pedal für Vorwärtsfahrt getreten wird.

Die mit der Erfindung zu lösende Aufgabe wird darin gesehen, bei einer derartigen Pedalsteuerung die Möglichkeit einer irrtümlichen Betätigung weitgehend auszuschalten. Diese Aufgabe ist nach der Erfindung dadurch gelöst worden, daß das das Fahrzeuggetriebe in die Drehrichtung für Rückwärtsfahrt schaltende Pedal aus seiner Ruhestellung durch Heruntertreten um eine zweite horizontale Welle, im umgekehrten Drehsinn verschwenkbar ist. Auf diese Weise schwenkt das Pedal für Vorwärtsfahrt bei Betätigung nach vorne unten und das Pedal für Rückwärtsfahrt nach hinten unten, d. h. es sind unterschiedliche Schwenkbewegungen vorgesehen, die von der Bedienungsperson unterschiedliche Fußbewegungen verlangen und somit eine irrtümliche Betätigung erschweren. Im ganzen gesehen verlaufen die Bewegungsabläufe in Richtung der gewünschten Fahrtrichtung.

Damit die Bedienungsperson für eine gewünschte Fahrtrichtungsänderung ein noch sichereres Gefühl bekommt, ist nach einem weiteren Vorschlag der Erfindung vorgesehen, daß in Fahrzeuglängsrichtung gesehen das das Fahrzeuggetriebe in die Drehrichtung für Vorwärtsfahrt schaltende Pedal vor dem das Fahrzeuggetriebe in die Drehrichtung für Rückwärtsfahrt schaltenden Pedal angeordnet ist. Durch diese Anordnung wird die Bedienungsperson beim Umschalten von Vorwärtsfahrt auf Rückwärtsfahrt bzw. umgekehrt gezwungen, ihr Bein nach hinten bzw. nach vorne zu bewegen.

Im einzelnen kann für eine derartige Anordnung vorgesehen werden, daß auf einer Fußstütze für die Bedienungsperson ein aufrechtstehender Bügel vorgesehen ist, der an seinem oberen Ende eine Welle mit einer an ihr einenends angeschlossenen, entgegen dem Uhrzeigerdrehsinn schwenkbaren Pedaltretfläche aufnimmt, wobei ein Verbindungsteil zum Schalten des Fahrzeuggetriebes in seine Drehrichtung für Rückwärtsfahrt durch die Fußstütze durchtritt und mit der Pedaltretfläche in Wirkverbindung steht. Damit verhindert die in dem Bügel vorgesehene Welle, die in dem Bügel drehbar gelagert sein kann und dann die Pedaltretfläche drehfest aufnimmt, wobei auch eine drehfeste Anordnung der Welle möglich ist, daß das Pedal im Uhrzeigerdrehsinn nach unten getreten werden kann.

Hinsichtlich der Wirkverbindung zwischen Pedaltretfläche und Verbindungsteil wird vorgeschlagen, daß der Verbindungsteil gegen die Unterseite der Pedaltretfläche anliegt und durch ein Langloch in der Fußstütze durchtritt.

Für eine andere Anordnung des Pedals für die Rückwärtsfahrt kann nach der Erfindung vorgesehen werden, daß an einen vertikal schwenkbaren Schwenkarm das Pedal zum Schalten des Fahrzeuggetriebes in seine Drehrichtung für Vorwärtsfahrt mittel- oder unmittelbar, oberhalb dieser Anschlußstelle eine zum Fahrzeuggetriebe führende Verbindungsstange oder dergleichen an den Schwenkarm und zwischen diesen Anschlußstellen ein Hebel an den Schwenkarm angeschlossen sind, wobei dieser Hebel an seinem anderen Ende über einen weiteren Hebel mit einer Welle verbunden ist, die das Pedal zum Schalten des Fahrzeuggetriebes in seine Drehrichtung für Rückwärtsfahrt drehfest aufnimmt, wobei die mit dem weiteren Hebel drehfest verbundene Welle an dem frontseitigen Ende des Pedals zum Schalten des Fahrzeuggetriebes in seine Drehrichtung für Rückwärtsfahrt vorgesehen und in den an den Schwenkarm angeschlossenen Hebel zur Aufnahme des weiteren Hebels ein Langloch eingearbeitet ist. Auch hier verhindert die mit dem weiteren Hebel drehfest verbundene Welle ein Heruntertreten des Pedals im Uhrzeigerdrehsinn, wobei diese Welle zweckmäßigerweise im Fahrzeugrahmen zu lagern ist. Natürlich ist es auch möglich, sofern die gegebenen Platzverhältnisse dies erfordern sollten, eine zusätzliche Lagerstelle für das Pedal vorzusehen. Sollte jedoch auf das Pedal eine in Fahrtrichtung wirkende Kraft irrtümlicherweise ausgeübt werden, so verhindert das vorgesehenen Langloch eine Verstellung des Pedals für Vorwärtsfahrt. Eine automatische Rückführung in die Ruhestellung wird dadurch erreicht, daß an den an den Schwenkarm angeschlossenen Hebel eine Feder angeschlossen ist, die anderenends an einer den Schwenkarm lagernden horizontalen Welle angreift.

Der Schwenkarm wird damit über die Pedale so gesteuert, daß er das Fahrzeuggetriebe aus seiner Neutrallage umschalten kann. Nach der Erfindung kann aber auch noch vorgesehen werden, daß der Schwenkarm bei Betätigung der Fahrzeugbremse und/oder einer Parksperre in eine Stellung verschwenkbar ist, in der das Fahrzeuggetriebe über die an ihm angreifende Verbindungsstange oder dergleichen in seine Neutrallage verstellt wird. Dies wird in einfacher Weise dadurch erreicht, daß ein bei Betätigung der Fahrzeugbremse hochschwenkbarer Verriegelungsnocken vorgesehen ist, der an seinem seiner Lagerstelle abgelegenen Ende einen Hakenteil aufweist, der derart ausgebildet ist, daß er in jeder Lage des Schwenkarms ein an diesem vorgesehenes Gegenteil erfassen kann und den Schwenkarm in seine das Fahrzeuggetriebe in seine Neutrallage schaltende Stellung zurückführt.

Eine unbeabsichtigte Schaltung des Fahrzeuggetriebes wird dann ausgeschlossen, wenn nach einem weiteren erfindungsgemäßen Vorschlag der Verriegelungsnocken in einer Stellung, in der er den Schwenkarm in seine das Fahrzeuggetriebe in die Neutrallage schaltende Stellung zurückgeführt hat, von einem Feststellhebel erfaßbar ist, der in Abhängigkeit von der Betätigung der Parksperre verschwenkbar ist.

In der Zeichnung sind nachfolgend näher erläuterte Ausführungsbeispiele der erfindungsgemäßen Steuervorrichtung sowie auch bekannter Steuereinrichtungen dargestellt. Es zeigt:
- Fig. 1: eine bekannte Steuervorrichtung,
- Fig. 2: eine neue Steuereinrichtung in perspektivischer Ansicht,
- Fig. 3: eine ähnliche Darstellung wie in Fig. 2 mit dem Fuß einer Bedienungsperson,
- Fig. 4: einen Kleinschlepper mit einer herkömmlichen manuell betätigbaren Steuereinrichtung,
- Fig. 5: eine neue Pedalanordnung für eine weitere erfindungsgemäße Steuereinrichtung,
- Fig. 6: die Steuereinrichtung nach Fig. 5 in Seitenansicht,
- Fig. 7: die Steuereinrichtung nach Fig. 6 in der Draufsicht,
- Fig. 8a, 8b: Einzelheiten der Steuereinrichtung nach den Figuren 6 und 7,
- Fig. 9: einen selbstfahrenden Rasenmäher mit einer erfindungsgemäßen Steuereinrichtung,
- Fig. 10: die Pedalanordnung der Steuereinrichtung nach Fig. 9,
- Fig. 11a: einen Ausschnitt der Gestängeanordnung für die Steuereinrichtung nach Fig. 9,
- Fig. 11b: eine Draufsicht auf die Gestängeanordnung nach Fig. 11a,
- Fig. 12: die Steuereinrichtung nach Fig. 9 in der Seitenansicht,
- Fig. 13: die Draufsicht auf die Steuereinrichtung nach Fig. 12 und
- Fig. 14: eine Umschaltvorrichtung für ein Fahrzeuggetriebe.

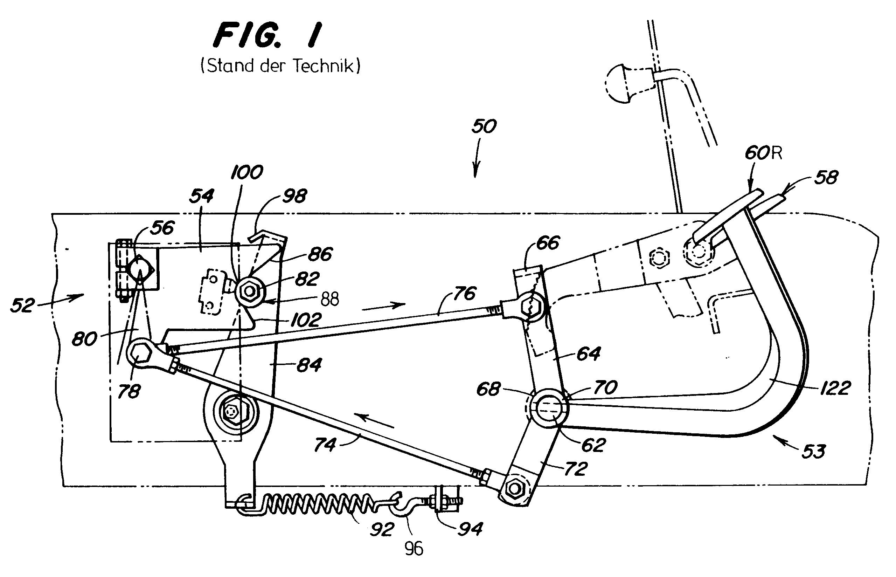

In den Figuren 1 bis 3 ist eine Steuereinrichtung 50 zum Einstellen der Fahrgeschwindigkeit für einen Kleinschlepper 51 dargestellt, die ein System 52 zum Auffinden der Neutrallage eines einstellbaren Fahrzeuggetriebes und zum Rückführen des Fahrzeuggetriebes in die Neutrallage sowie ein Pedalsystem 53 zum Verstellen des Fahrzeuggetriebes in eine Drehrichtung für Vorwärtsfahrt und in eine Drehrichtung für Rückwärtsfahrt aufweist. Die nachfolgend kurz erläuterte und in Fig. 1 dargestellte Steuereinrichtung 50 ist bekannt und ausführlich in dem Dokument US-A-4 759 417 beschrieben, auf das Bezug genommen wird.

Aus Fig. 1 ist zu ersehen, daß das Pedalsystem 53 mit dem System 52 zum Auffinden der Neutrallage und zum Rückführen in die Neutrallage verbunden ist und zum Verdrehen eines Nockens 54 benutzt wird, der an einer Steuerwelle 56 eines hydrostatischen Getriebes, das in der Zeichnung nicht dargestellt ist, angreift.

Das Pedalsystem 53 weist ein Pedal 58 zum Verstellen des Getriebes in eine Drehrichtung für Vorwärtsfahrt und ein Pedal 60R zum Verstellen des Getriebes in eine Drehrichtung für Rückwärtsfahrt auf, die mit einer Welle 62 in Wirkverbindung stehen. Im einzelnen ist ein Rückwärtshebel 64, der an seinem einen Ende einen Flansch 66 und an seinem anderen Ende eine Nabe 68 aufweist, an der Welle 62 befestigt, wobei die Nabe 68 an einem Ende auf der Welle 62 fest angeordnet ist, das der Lagerstelle des Pedals 60R für die Rückwärtsfahrt abgelegen ist.

Der Rückwärtshebel 64 erstreckt sich von der Welle 62 aus gesehen nach oben. Das Pedal 58 für die Vorwärtsfahrt ist mit einer Pedalbuchse 70 fest verbunden, die auf der Welle 62 drehbar gelagert ist. An die Pedalbuchse 70 ist ein Vorwärtshebel 72 angeschlossen, der sich von der Welle 62 aus gesehen nach unten erstreckt.

Verbindungsstangen 74 und 76 sind an dem Rückwärtshebel 64 und an dem Vorwärtshebel 72 mit ihrem jeweiligen einen Ende angelenkt, während ihr anderes Ende an einem Bolzen 78 mit einem Abstandshalter angreift. Der Bolzen 78 wiederum ist an einem Nockenfortsatz 80 des Nockens 54 vorgesehen. Da das Pedal 58 für die Vorwärtsfahrt an der Pedalbuchse 70 angreift, die auf der Welle 62 drehbar gelagert ist, und da die an den Vorwärtshebel 72 angeschlossene Verbindungsstange 74 sich unterhalb der Welle 62 und die an den Rückwärtshebel 64 angeschlossene Verbindungsstange 76 sich oberhalb der Welle 62 befindet, wird der Nocken 54 beim Treten der Pedale 58 oder 60R in entgegengesetzte Richtungen verschwenkt, wobei der Bolzen 78, an dem die Verbindungsstangen anderenends angreifen, unterhalb des Schwenkpunktes des Nockens 54 liegt, der durch die Steuerwelle 56 gebildet wird.

Um nun ein Fahrzeug, das mit der vorbeschriebenen Steuereinrichtung 50 zum Einstellen der Fahrgeschwindigkeit ausgerüstet ist, vorwärts oder rückwärts zu fahren, muß lediglich das entsprechende Pedal heruntergetreten werden, wobei die Steuereinrichtung so ausgebildet sein kann, daß bei dem anfänglichen Heruntertreten die Drehrichtung und danach die Fahrgeschwindigkeit geändert wird. Tritt beispielsweise eine Bedienungsperson das Pedal 58 für die Vorwärtsfahrt herunter, das auf der Welle 62 drehbar gelagert ist, so wird der von der Welle 62 nach unten weisende Vorwärtshebel 72 im Uhrzeigerdrehsinn verschwenkt, wodurch die an ihm angreifende Verbindungsstange 74 mit Bezug auf Fig. 1 nach hinten verstellt und der Nocken 54 und damit die Steuerwelle 56 im Uhrzeigerdrehsinn verdreht wird. Bei dieser Bewegung wird eine Rolle 82, die an einem Nockenstössel 84 angeordnet ist, sich auf den oberen Schenkel 86 eines in dem Nocken 54 vorgesehenen V-förmigen Ausschnittes 88 aufschieben, wodurch der Nockenstössel 84 ebenfalls im Uhrzeigerdrehsinn verschwenkt und eine Feder 92 spannt. Da aber auch an dem von der Welle 62 nach oben weisenden Rückwärtshebel 64, der auf der Welle 62 drehfest angeordnet ist, eine Verbindungsstange 76 angreift, wird beim Heruntertreten des Pedals 58 für die Vorwärtsfahrt das Pedal 60 für die Rückwärtsfahrt um denselben Betrag aus seiner Ruhestellung entgegen dem Uhrzeigerdrehsinn nach oben verschwenkt.

Die Feder 92 greift an dem Nockenstössel 84 an seinem der Rolle 82 abgelegenen Ende an, und zwar unterhalb der Lagerstelle des Nockenstössels, und ist anderenends an einen Rahmenteil 94 über eine einstellbare Stellschraube angeschlossen. Wurde nun durch Heruntertreten des Pedals 58 für die Vorwärtsfahrt die Feder 92 gespannt und nimmt die Bedienungsperson ihren Fuß von dem Pedal 58, so wird die Feder 92 den Nockenstössel 84 entgegen dem Uhrzeigerdrehsinn zurückschwenken, wobei die Rolle 82 wieder in die Spitze 100 des V-förmigen Ausschnittes 88 zurückgleitet und den Nocken 54 und damit auch die Steuerwelle 56 wieder in ihre der Neutrallage des Getriebes entsprechende Stellungen zurückführt. Gleichzeitig wird auch das Pedal 60R für die Rückwärtsfahrt in seine Ruhestellung zurückgeführt.

Soll das Fahrzeug rückwärts gefahren werden, so betätigt die Bedienungsperson das Pedal 60R für die Rückwärtsfahrt, wodurch der Rückwärtshebel 64 und die mit ihm fest verbundene Welle 62 im Uhrzeigerdrehsinn verschwenkt werden und die am oberen Teil des Rückwärtshebels 64 angeschlossene Verbindungsstange 76 mit Bezug auf Fig. 1 nach vorne gezogen wird. Dadurch wiederum werden der Nocken 54 und auch die Steuerwelle 56 entgegen dem Uhrzeigerdrehsinn verstellt, wobei die Rolle 82 sich auf den unteren Schenkel 102 des V-förmigen Ausschnittes 88 schiebt und den Nockenstössel 84 im Uhrzeigerdrehsinn verschwenkt und die Feder 92 spannt. Auch bei diesem Bewegungsablauf wird über die Verbindungsstange 74 das Pedal 58 für die Vorwärtsfahrt um einen entsprechenden Betrag entgegen dem Uhrzeigerdrehsinn nach oben und rückwärts verschwenkt. Über die einstellbare Stellschraube und die daran angeschlossene Feder 92 wird bei im Uhrzeigerdrehsinn verschwenktem Nockenstössel 84 auf diesen stets ein solcher Zug ausgeübt, der bei nachlassendem oder nicht vorhandenem Druck auf eines der Pedale ausreicht, die Pedale in ihre Ruhestellung zurückzuführen und auch den Nocken 54 in eine Stellung, die der Neutrallage des Fahrzeuggetriebes entspricht, weil infolge des Zugs durch die Feder 92 der Nockenstössel 84 entgegen dem Uhrzeigerdrehsinn dann verschwenkt, die Rolle 82 dabei in die Spitze 100 des V-förmigen Ausschnittes zurückwandert und dadurch der Nocken 54 und die Steuerwelle 56 entgegen dem Uhrzeigerdrehsinn verschwenkt werden.

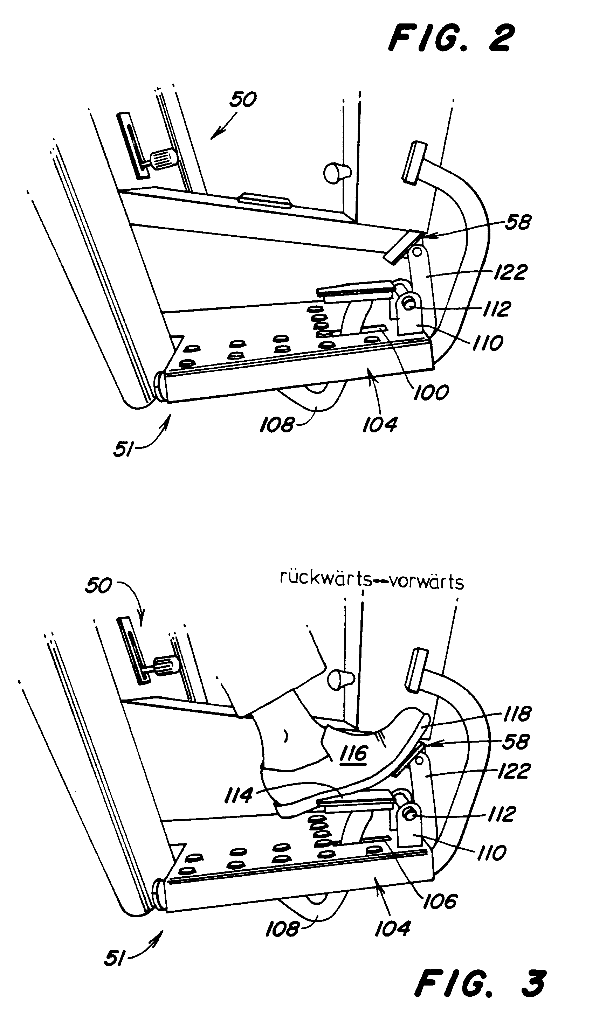

Das Konzept der Steuereinrichtung 50 nach Fig. 1 gilt auch für das Ausführungsbeispiel in den Figuren 2 und 3, bei dem lediglich die Anordnung und Ausführung eines Pedals 114 für die Rückwärtsfahrt geändert wurde. In der Ausführung nach Fig. 1 sind die Pedale im wesentlichen gleich angeordnet und ausgebildet sowie auf gleichen Kreisbögen verschwenkbar. Dies ist allerdings insoweit von Nachteil, als daß eine Bedienungsperson die beiden Pedale leicht verwechseln und damit irrtümlich betätigen kann. Zumindest kann bei dieser Anordnung nicht ausgeschlossen werden, daß eine Bedienungsperson sich durch einen Blick zu vergewissern hat, welches Pedal sie für welche Fahrtrichtung zu treten hat. Auch kann es bei der Ausführung nach Fig. 1 vorkommen, daß bei einigen Bedienungspersonen der Fuß bei einer Betätigung nicht auf einer Fahrerplattform oder einer Fußstütze abgestellt werden kann, was ein schnelles Wechseln von einem Pedal auf das andere erschwert.

In der Ausführung nach den Figuren 1 und 2 wurde nun das Pedal 114 für die Rückwärtsfahrt bzw. dessen Pedaltretfläche aus seiner Position nach Fig. 1 von vorne nach rückwärts verlegt in einen Bereich einer Fußstütze 104, der hinter dem Pedal 58 für die Vorwärtsfahrt liegt. Auch ein Verbindungsteil 108, der die Pedaltretfläche mit der Welle 62 verbindet, wurde entsprechend zurückverlegt und durch eine Öffnung 106 in Form eines Langloches in der Fußstütze 104 geführt. Außerdem wurde die Pedaltretfläche mit einer Welle 112 fest verbunden, die an dem oberen Ende eines Bügels 110 drehbar gelagert ist. Der Bügel 110 selbst ist auf die Oberseite der Fußstütze aufgesetzt und erstreckt sich von dieser nach oben. Selbstverständlich kann die Welle 112 auch drehfest in dem Bügel 110 angeordnet sein, muß dann aber das vordere Ende der Pedaltretfläche drehbar aufnehmen. Durch diese Anordnung verschwenkt das Pedal 114 für die Rückwärtsfahrt oder seine Pedaltretfläche bei Betätigung durch eine Bedienungsperson entgegen dem Uhrzeigerdrehsinn auf einem Kreisbogen nach hinten und von dem Fuß 116 der Bedienungsperson fort.

Aus Fig. 3 ist nun erkennbar, daß eine Bedienungsperson das Pedal 58 für die Vorwärtsfahrt mit dem Ballen oder den Zehen 118 ihres Fußes 116 betätigen kann, um den Teil 122, wie bei der Ausführung nach Fig. 1, entsprechend im Uhrzeigerdrehsinn zu verschwenken, wobei die Ferse ihres Fußes 116 auf der Fußstütze 104 verbleibt. Soll nun das Fahrzeug rückwärts gefahren werden, so verringert die Bedienungsperson den Druck auf das Pedal 58 für Vorwärtsfahrt, das Fahrzeug kommt zum Stehen, weil beim Zurückführen des Pedals 58 in seine Ruhelage das Fahrzeuggetriebe in seine Neutrallage geschaltet wird, und die Bedienungsperson braucht ihren Fuß 116 nur noch um die Ferse nach außen zu drehen, um die Pedaltretfläche des Pedals 114 für die Rückwärtsfahrt betätigen zu können. Dabei können die Pedale einander so zugeordnet sein, daß auch bei der Fußdrehung die Ferse auf der Fußstütze abgestützt bleibt und die Bedienungsperson das Pedal 114 für die Rückwärtsfahrt mit ihrer Fußspitze bei weiter auf der Fußstütze sich abstützender Ferse erreicht.

Der Fuß der Bedienungsperson muß also unterschiedliche Bewegungsabläufe durchlaufen, um das Pedal 58 für Vorwärtsfahrt oder das Pedal 114 für Rückwärtsfahrt betätigen zu können. Sollte die Bedienungsperson allerdings irrtümlich das Pedal 114 für die Rückwärtsfahrt wie das Pedal 58 für die Vorwärtsfahrt betätigen wollen - beispielsweise bei einer Verwechslung -, so wäre dieser Versuch zum Scheitern verurteilt, da bei einem im Uhrzeigerdrehsinn auf das Pedal 114 für Rückwärtsfahrt einwirkenden Druck die Fußspitze einen Druck auf die Welle 112 ausüben würde mit der Folge, daß der Verbindungsteil 108 nicht bewegt würde.

Andererseits ist es im Rahmen der Erfindung durchaus auch möglich, daß das Pedal für die Rückwärtsfahrt so angeordnet wird, daß die Bedienungsperson ihren Fuß nicht nur zur Seite drehen muß, um das Pedal zu erreichen, sondern ein Stück nach rückwärts bewegt. Jedenfalls sollte aber die Pedalanordnung derart sein, daß die Bedienungsperson ihren Fuß nach vorne bewegen muß, wenn eine Vorwärtsfahrt gewünscht ist, oder nach hinten, wenn eine Rückwärtsfahrt erwünscht ist.

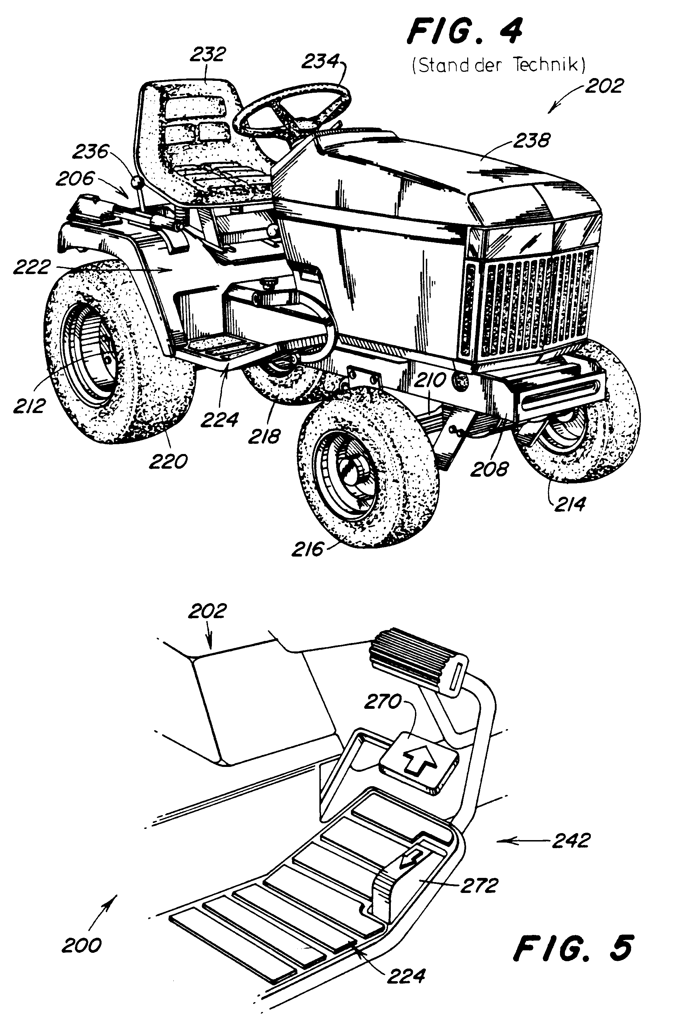

Fig. 4 zeigt einen Kleinschlepper 202 mit einer herkömmlichen von Hand betätigbaren Steuereinrichtung 206 für die Umschaltung eines Fahrzeuggetriebes, die aber durch eine in den Figuren 5 bis 8 gezeigte Ausführungsform für eine Steuereinrichtung 200, die im Prinzip wie die Steuereinrichtung nach den Figuren 2 und 3 arbeitet, ersetzt werden kann. Der Kleinschlepper 202 nach Fig. 4 ist mit einem Rahmen 208, einer Vorderachse 210 und einer Hinterachse 212 ausgestattet. Zwei Vorderräder 214, 216 sind an der Vorderachse 210 und zwei Hinterräder 218, 220 sind an der Hinterachse 212 angeordnet. An dem Rahmen 208 ist über die Hinterachse 212 sich erstreckend ein Schutzblechdeck 222 mit zwei Fußstützen 224 vorgesehen, von denen nur eine in der Fig. 4 sichtbar ist. Ein Fahrerplatz mit einem Sitz 232, einem Lenkrad 234 und einem von Hand betätigbaren Fahrtrichtungssteuerhebel 236 ist ebenfalls erkennbar, wobei der Fahrtrichtungssteuerhebel zum Umschalten eines nicht gezeigten Fahrzeuggetriebes in eine Drehrichtung für Vorwärtsfahrt und in eine Drehrichtung für Rückwärtsfahrt dient. Eine Motorhaube ist mit 238 bezeichnet.

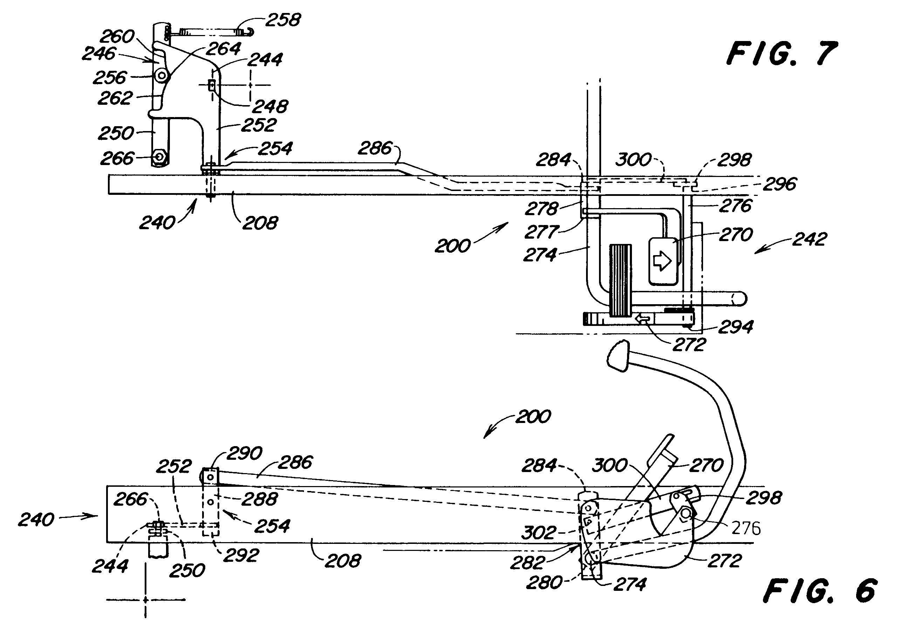

Die Steuereinrichtung 200 zum Einstellen der Fahrgeschwindigkeit weist ein System 240 (Fig. 6,7) zum Auffinden der Neutrallage des Fahrzeuggetriebes und zum Rückführen des Fahrzeuggetriebes in die Neutrallage sowie ein Pedalsystem 242 auf, das zum Umschalten der Drehrichtung des Fahrzeuggetriebes auf eine Drehrichtung für Vorwärtsfahrt und in eine Drehrichtung für Rückwärtsfahrt dient. Das System 240 ist mit einem Nocken 244, der einen V-förmigen Ausschnitt 246 aufweist, und mit einer Steuerwelle 248 für das Fahrzeuggetriebe verbunden und mit einem Nockenstössel 250 ausgerüstet, der schwenkbar mit dem Rahmen 208 des Fahrzeugs verbunden ist.

Die Verbindung des Nockens 244 mit der Steuerwelle 248 des Fahrzeuggetriebes dient als Schwenkpunkt für den Nocken, der darüber hinaus mit einem Nockenfortsatz 252 versehen ist. Letzterer greift an einem Schwenkteil 254 an, der an dem Rahmen 208 des Fahrzeugs angeordnet ist. Auch der Nockenstössel 250 ist bei dieser Ausführung mit einer an ihm drehbar angeordneten Rolle 256 versehen, die mit dem V-förmigen Ausschnitt 246 in dem Nocken 244 zusammenarbeitet. Der Nockenstössel 250 ist einenends schwenkbar an das Fahrzeuggetriebe angeschlossen und steht anderenends unter der Wirkung einer Feder 258, so daß die Rolle 256 während des Einsatzes an einem der Schenkel 260, 262 des V-förmigen Ausschnittes 246 in Abhängigkeit von der Schwenkbewegung des Nockens 244 entlang gleiten kann. Eine Schwenkung des Nockens 244 aus seiner der Neutrallage des Fahrzeuggetriebes entsprechenden Stellung bewirkt, daß die Rolle 256 aus der Spitze 264 des V-förmigen Ausschnittes 246 herausbewegt wird und der Nockenstössel 250 um seine Lagerstelle, die ein Exzenter 266 sein kann, verschwenkt wird und dabei die Feder 258 spannt. Sobald die den Nocken 244 verschwenkende Kraft nachläßt bzw. kleiner ist als die Kraft der Feder 258, kann die Feder 258 den Nockenstössel 250 wieder zurückschwenken, wobei die Rolle 256 wieder in die Spitze 264 des V-förmigen Ausschnittes gelangt und dabei den Nocken 244 zurückschwenkt.

Das Pedalsystem 242 weist ein Pedal 270 für Vorwärtsfahrt, das mit einer ersten Welle 274 verbunden ist, und ein Pedal 272 für Rückwärtsfahrt auf, das mit einer zweiten Welle 276 in Verbindung steht. Die beiden Wellen 274, 276 sind parallel oder etwa parallel zueinander angeordnet, wobei die Welle 276 weiter von dem System 240 entfernt ist als die Welle 274. Im einzelnen ist das Pedal 270 für die Vorwärtsfahrt mit der einen Seite 277 einer U-förmigen Stütze 278 verbunden, die um die erste Welle 274 schwenken kann. Die andere Seite dieser Stütze 278 nimmt das eine Ende 280 eines Schwenkarms 282 auf, der damit ebenfalls um die erste Welle 274 verschwenkbar ist. Das andere Ende 284 dieses Schwenkarms 282 ist über eine Verbindungsstange 286 an den Schwenkteil 254 angeschlossen. Der Schwenkteil 254 selbst besteht aus einem Längsteil 288, der in seiner Mitte mit dem Rahmen 208 des Fahrzeuges schwenkbar verbunden, an seinem einen Ende 290 an die Verbindungsstange 286 und mit seinem anderen Ende 292 an den Nockenfortsatz 252 angeschlossen ist.

Das Pedal 272 für die Rückwärtsfahrt steht durch die Fußstütze 224 nach oben vor und ist mit dem einen Ende 294 der zweiten Welle 276 verbunden. An das andere Ende 296 der zweiten Welle 276 ist ein erster Hebel 298 fest angeschlossen. Auf diese Weise verschwenkt der erste Hebel 298 zusammen mit der zweiten Welle 276, wenn diese bei Betätigung des Pedals 272 für die Rückwärtsfahrt betätigt wird. Ein zweiter Hebel 300 greift mit seinem einen Ende schwenkbar an dem ersten Hebel 298 und mit seinem anderen Ende an dem Schwenkarm 282 an einer Stelle 302 an, die zwischen der Anschlußstelle der Verbindungsstange 286 an den Schwenkarm 282 und dessen Anschluß an die Stütze 278 liegt. Die zweite Welle 276 ist zweckmäßig am Rahmen 208 drehbar gelagert.

Um nun das Fahrzeug entweder vorwärts oder rückwärts fahren zu können, muß die Bedienungsperson das Pedal 270 für Vorwärtsfahrt oder das Pedal 272 für Rückwärtsfahrt betätigen. Wird beispielsweise das Pedal 270 für Vorwärtsfahrt heruntergetreten, das um die erste Welle 274 verschwenkbar ist, so dreht sich die Stütze 278 und der mit ihr fest verbundene Schwenkarm 282 im Uhrzeigerdrehsinn, wodurch die Verbindungsstange 286 nach vorne gezogen und der Längsteil 288 ebenfalls im Uhrzeigerdrehsinn verschwenkt wird. Hierdurch wiederum wird der Nocken 264 zusammen mit der Steuerwelle 248 sich im Uhrzeigerdrehsinn drehen, wobei die Rolle 256 aus der Spitze 264 des Ausschnittes 246 austritt.

Bei der Betätigung des Pedals 270 für die Vorwärtsfahrt wird normalerweise das Pedal 272 für die Rückwärtsfahrt um den gleichen Betrag in entgegengesetzter Richtung verdreht, und sobald die Bedienungsperson ihren Fuß von dem Pedal für Vorwärtsfahrt nimmt, kann die Feder 258 den Nockenstössel 250 im Uhrzeigerdrehsinn zurückdrehen, wobei die Rolle 256 wieder in die Spitze 264 des V-förmigen Ausschnittes 246 zurückgleitet und dabei den Nocken 244 und damit auch die Steuerwelle 248 in eine Stellung zurückschwenkt, die der Neutrallage des Fahrzeuggetriebes entspricht. Bei diesem Vorgang werden auch die beiden Pedale in ihre Ruhestellung zurückgeführt.

Soll das Fahrzeug nun rückwärts gefahren werden, so wird die Bedienungsperson ihren Fuß um die auf der Fußstütze 224 sich abstützende Ferse etwas nach hinten rechts drehen, um das Pedal 272 für die Rückwärtsfahrt zu erreichen. Beim Heruntertreten dieses Pedals wird die zweite Welle 276 entgegen dem Uhrzeigerdrehsinn verschwenkt, wobei der erste Hebel 298 in derselben Richtung mitdreht und den zweiten Hebel 300 nach rückwärts verstellt. Dies wiederum bewirkt eine Drehung des Schwenkarms 282 entgegen dem Uhrzeigerdrehsinn und eine Verstellung der Verbindungsstange 286 nach rückwärts sowie eine Drehung des Längsteils 288 entgegen dem Uhrzeigerdrehsinn. Durch den Anschluß des Längsteils 288 an den Nockenstössel 252 wird der Nocken 244 selbst entgegen dem Uhrzeigerdrehsinn verstellt und damit auch die Steuerwelle 248.

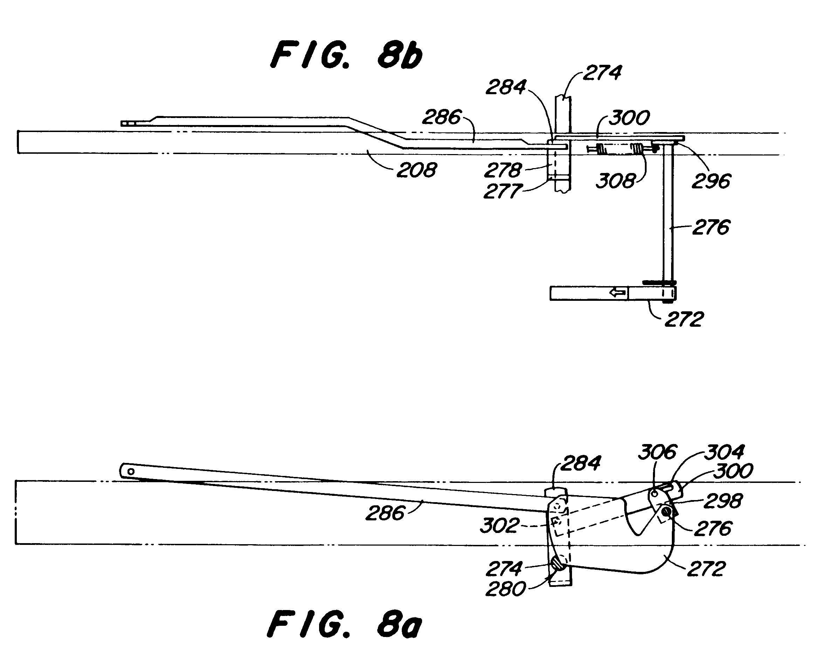

Wie insbesondere aus den Figuren 6 und 8a hervorgeht, ist der zweite Hebel 300 mit einem Schlitz 304 ausgerüstet, in dem ein mit dem ersten Hebel 298 verbundener Stift 306 gleiten kann, so daß zwischen diesen beiden Hebeln eine Totgangverbindung besteht. Diese Totgangverbindung soll verhindern, daß bei einer falschen Betätigung des Pedals 272 für die Rückwärtsfahrt, d. h. im Uhrzeigerdrehsinn, das Pedal 272 das Pedal 270 für die Vorwärtsfahrt betätigt, wodurch eine Fahrzeugbewegung in die falsche Richtung entstehen würde. Aus Fig. 8b geht noch hervor, daß zwischen der zweiten Welle 276 und dem zweiten Hebel 300 eine Feder 308 vorgesehen ist, die den zweiten Hebel 300 in seine Ruhestellung ziehen will.

Aus Fig. 5 ist nun deutlich zu erkennen, daß bei auf die Fußstütze 224 abgestellter Ferse und sich auf dem Pedal 270 für Vorwärtsfahrt befindlicher Fußspitze die Bedienungsperson ihre Fußspitze nach vorne unten bewegen wird, damit das Fahrzeug vorwärts fahren kann. Soll andererseits die Fahrtrichtung geändert, d. h. rückwärts gefahren werden, wird die Bedienungsperson bei auf der Fußstütze noch abgestellter Ferse ihre Fußspitze zurücknehmen, wobei das Pedal 270 für die Vorwärtsfahrt wieder in seine Ruhelage zurückkehrt, und nachdem das Fahrzeug zu einem Stillstand gekommen ist, wird die Bedienungsperson ihre Fußspitze seitlich und rückwärts drehen, bis sie das Pedal 272 für die Rückwärtsfahrt erreicht hat, und dieses mit der Fußspitze niedertreten. Auch bei dieser Ausführung sind also für die Betätigung der Pedale unterschiedliche Bewegungsabläufe erforderlich.

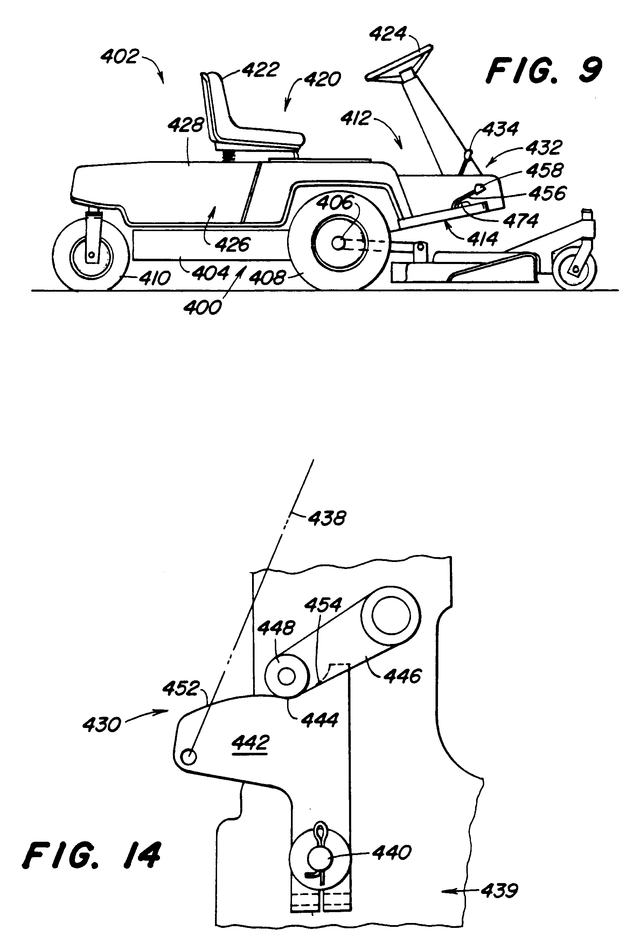

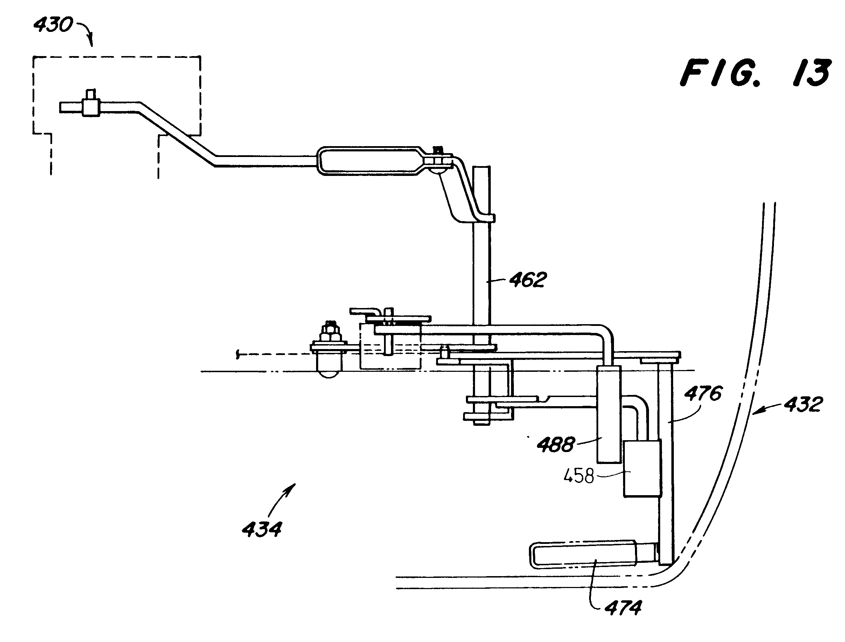

Die in den Figuren 9 bis 13 dargestellte Steuereinrichtung 400 zum Einstellen der Fahrgeschwindigkeit ist an einem selbstfahrenden Frontrasenmäher 402 vorgesehen. Letzterer weist einen Rahmen 404, eine Vorderachse 406 mit zwei vorderen Antriebsrädern 408 (lediglich eins ist in der Zeichnung zu erkennen) und ein einzelnes Hinterrad 410 auf. Auf dem Rahmen 404 ist eine Fahrerplattform 412 mit Fußstützen 414 und einem Bedienungsstand 420 angeordnet, der unter anderem einen Sitz 422 und ein Lenkrad 424 aufweist. Der Frontrasenmäher wird durch eine Motorgetriebekombination 426 angetrieben, die von einer Haube 428 abgedeckt ist.

Die Steuereinrichtung 400 zum Einstellen der Fahrgeschwindigkeit ist mit einem System 430 zum Auffinden der Neutrallage eines Getriebes und zum Rückführen des Getriebes in die Neutrallage, einem Pedalsystem 432 zum Ändern der Drehrichtung des Getriebes in eine Drehrichtung für Vorwärtsfahrt und in eine Drehrichtung für Rückwärtsfahrt, einem Bremssystem 434, das mit dem Pedalsystem 432 und dem System 430 verbunden ist, und mit einem Parksperrsystem 436 versehen, das mit dem Bremssystem 434, dem Pedalsystem 432 und mit dem System 430 in Verbindung steht.

In Fig. 14 ist das System 430 zum Auffinden der Neutrallage des Getriebes und zum Rückführen des Getriebes in die Neutrallage dargestellt. Es weist im einzelnen ein Verbindungsgestänge oder ein Kabel 438 zum Verstellen einer Steuerstange 440 eines stufenlosen Getriebes 439 auf und entspricht in seiner Funktion den beiden vorher beschriebenen Systemen 52, 240 oder dem System aus dem Dokument US-A-4 759 417, auf das Bezug genommen wird. Bei diesem System 430 ist ferner ein Nocken mit 442 bezeichnet, der einen V-förmigen Ausschnitt 444 aufweist. Dieser wirkt mit einer Rolle 448 zusammen, die an einem Nockenstössel 446 drehbar vorgesehen ist. Der Nockenstössel 446 steht unter der Wirkung einer nicht dargestellten Feder, die bestrebt ist, den Nocken 442 in seine Stellung zurückzuverstellen, die der Neutrallage des Getriebes entspricht und in der die Rolle 448 in der Spitze des V-förmigen Ausschnittes sich befindet. Das Verbindungsgestänge bzw. das Kabel 438 dient dazu, den Nocken 442 in Abhängigkeit von der Betätigung eines der Pedale des Pedalsystems 432 zu verstellen, wobei dann die Rolle 448 auf einen der Schenkel 452 bzw. 454 des Ausschnittes 444 geschoben wird.

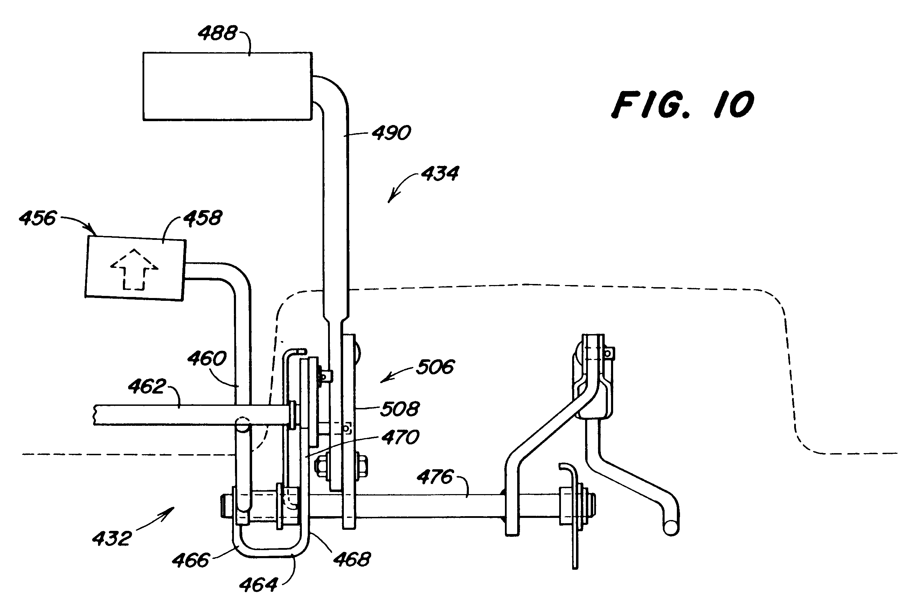

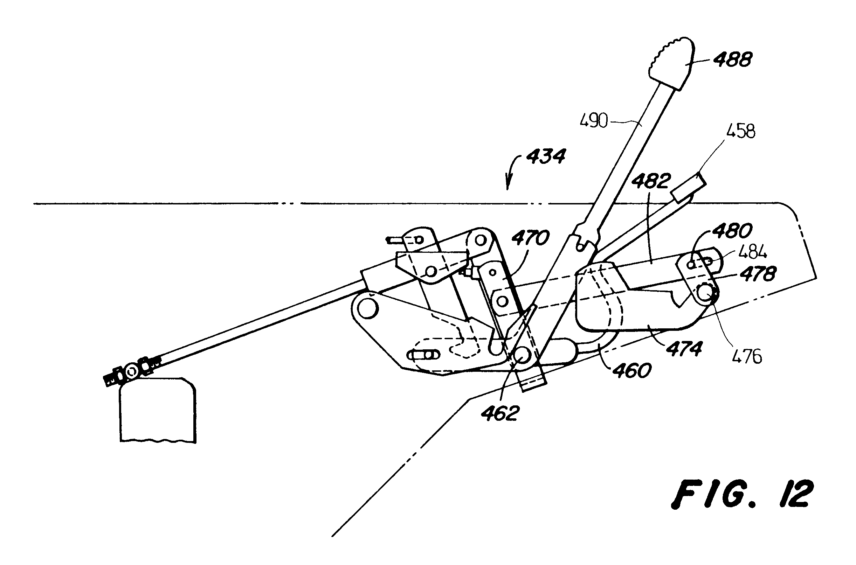

In den Figuren 10 und 12 ist das Pedalsystem 432 nochmals dargestellt. Dabei ist das Pedal 458 für die Vorwärtsfahrt mit einer Pedaltretfläche 456 und mit einem Stellarm 460 versehen, der schwenkbar mit einer ersten Welle 462 verbunden ist. Eine U-förmig ausgebildete Stütze 464 weist einen Teil 466 auf, der mit dem Stellarm 460 in Verbindung steht, und einen Teil 468, der an einem Schwenkarm 470 angreift. Auch der Schwenkarm 470 ist auf der ersten Welle 462 mit seinem einen Ende drehbar gelagert, während das andere Ende des Schwenkarms 470 an das Kabel 438 angeschlossen ist.

Ein Pedal 474 für die Rückwärtsfahrt ist mit einer zweiten Welle 476 verbunden, die parallel zu der ersten Welle 462, jedoch weiter vorne, d. h. vor der ersten Welle 462, angeordnet ist. Ein erster Hebel 478 mit einem Stift 480 ist an dem dem Pedal 474 abgelegenen Ende der zweiten Welle 476 fest angeordnet, und die zweite Welle ist drehbar im Rahmen gelagert. Ein zweiter Hebel 482, der an seinem einen Ende einen eine Totgangverbindung ermöglichenden Schlitz 484 aufweist, ist mit seinem anderen Ende an den Schwenkarm 470 angeschlossen und verbindet den ersten Hebel 478 mit dem Schwenkarm 470. Der zweite Hebel 482 greift etwa mittig an dem Schwenkarm 470 an.

Um den Frontrasenmäher 402 vorwärts oder rückwärts anzutreiben, muß die Bedienungsperson entweder das Pedal 458 für Vorwärtsfahrt oder das Pedal 474 für Rückwärtsfahrt betätigen. Betätigt die Bedienungsperson das Pedal 458 für die Vorwärtsfahrt, so verschwenkt der Stellarm 460 mit der daran fest angeordneten U-förmigen Stütze 464 im Uhrzeigerdrehsinn um die erste Welle 462. Dadurch verschwenkt auch der Schwenkarm 470 in die gleiche Richtung um die erste Welle 462 und zieht das Kabel 438 nach vorne. Dies bewirkt, daß die Rolle 448 aus der Spitze des Ausschnittes 444 am Nocken 442 austritt und sich auf den Schenkel 452 aufschiebt. Bei einer Bewegung des Pedals 458 für Vorwärtsfahrt im Uhrzeigerdrehsinn nach vorne und unten wird der zweite Hebel 482 nach vorne verstellt, wodurch auch der erste Hebel 478 und mit ihm die zweite Welle 476 im Uhrzeigerdrehsinn verschwenkt und das Pedal 474 für die Rückwärtsfahrt aus der Fußstütze 414 nach oben angehoben wird.

Für die Rückwärtsfahrt betätigt die Bedienungsperson das Pedal 474, wobei die zweite Welle 476 und der daran angeordnete erste Hebel 478 entgegen dem Uhrzeigerdrehsinn gedreht werden. Der Stift 480 liegt dann gegen das linke Ende des Schlitzes 484 an und verschiebt den zweiten Hebel 482 nach hinten, so daß der Schwenkarm 470 um die erste Welle 462 entgegen dem Uhrzeigerdrehsinn schwenkt und das Kabel 438 nach hinten gedrückt wird. Dabei dreht sich der Nocken 442 ebenfalls entgegen dem Uhrzeigerdrehsinn, und die Rolle 448 schiebt sich auf den Schenkel 454 auf, und zwar in derselben Art und Weise, wie sie für das vorstehende Ausführungsbeispiel diskutiert worden ist.

Eine in der Zeichnung nicht dargestellte Feder ist zwischen dem Stift 480 und dem zweiten Hebel 482 vorgesehen, um das Pedal 474 für die Rückwärtsfahrt wieder in seine Ruhelage zurückzuführen im Falle, daß es in der falschen Richtung betätigt worden ist. Sollte das Pedal 474 für die Rückwärtsfahrt in der falschen Richtung betätigt worden sein (d. h. im Uhrzeigerdrehsinn), dann würde die Totgangverbindung in dem zweiten Hebel 482 verhindern, daß über das Pedal 474 für die Rückwärtsfahrt das Pedal 458 für die Vorwärtsfahrt betätigt und das Fahrzeug in der falschen Richtung fahren würde. Dieses Merkmal ist besonders dann von Bedeutung, wenn sich Schmutz oder andere Fremdpartikel in dem Pedalmechanismus festsetzen sollten.

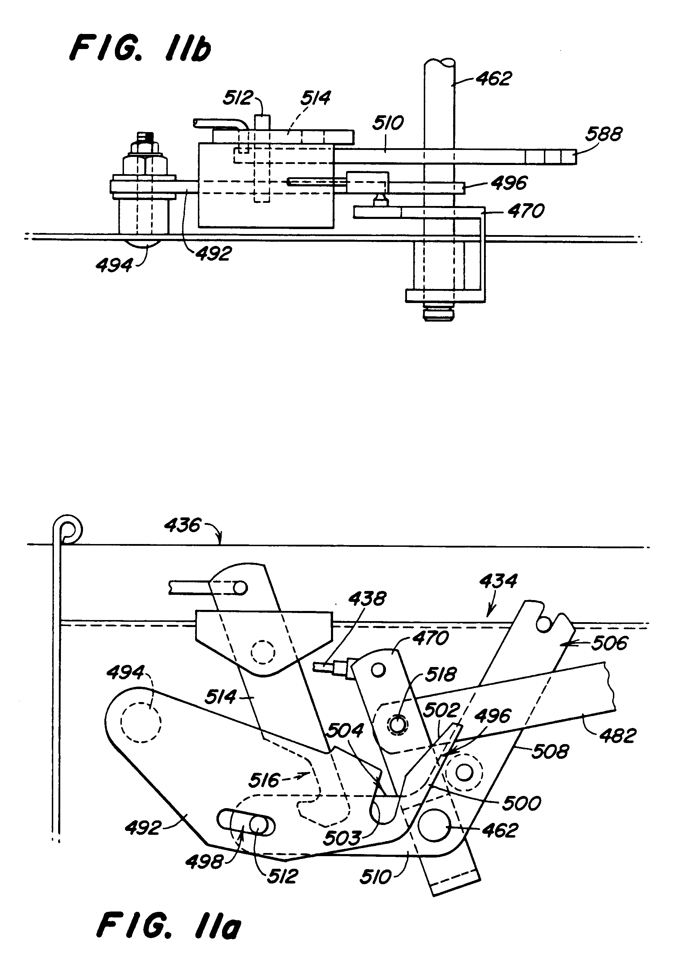

Insbesondere aus den Figuren 11a und 12 ist das Zusammenwirken des Bremssystems 434 und des Parksperrsystems 436 mit dem Pedalsystem 432 und dem System 430 zu ersehen. Das Bremssystem 434 weist eine Fußbremse mit einer Pedalfläche 488 auf, die an dem einen Ende eines Bremsarms 490 vorgesehen ist, der anderenends auf der ersten Welle 462 drehbar gelagert ist. Ein Verriegelungsnocken 492 dient dazu, das Gestänge des Pedalsystems in seine der Neutrallage des Fahrzeuggetriebes entsprechende Stellung zurückzuführen, wenn die Bremse betätigt wird. Der Verriegelungsnocken 492 ist drehbar mit dem Rahmen 404 des Fahrzeugs über einen einstellbaren Zapfen 494 verbunden, der an seinem einen Ende vorgesehen ist, während das andere Ende des Verriegelungsnockens einen Hakenteil 496 aufweist und zwischen dem Zapfen 494 und dem Hakenteil 496 ein Langloch 498 in den Verriegelungsnocken eingearbeitet ist. Der Hakenteil 496 ist mit einem verlängerten Teil 500 versehen, der an seinem äußeren Ende eine Nockenfläche 502 hat. Diese ist mit einer Öffnung 504 verbunden. Ein V-förmig ausgebildeter Hebel 506 ist mit dem Bremsarm 490 verbunden und auf der ersten Welle 462 aufgesetzt, wobei sein einer Schenkel 508 mit dem unteren Teil des Bremsarms 490 in Verbindung steht und der andere Schenkel 510 des Hebels 506 mit einem Feststellstift 512 versehen ist. Dieser greift in das Langloch 498 im Verriegelungsnocken 192 ein. Ein Feststellhebel 514 ist ebenfalls endseitig mit einem Hakenteil 516 ausgerüstet, am Fahrzeug gelenkig gelagert, dient zum Sperren des Fahrzeugs, wenn die Bremsen angelegt sind, und wird über einen nicht dargestellten Parkbremshebel verschwenkt, der neben dem Fahrersitz angeordnet sein kann.

Sollen die Bremsen betätigt werden, so muß die Bedienungsperson mit ihrem Fuß den Bremsarm 490 im Uhrzeigerdrehsinn nach vorne und unten verschwenken, wodurch die erste Welle 462 im Uhrzeigerdrehsinn verschwenkt wird. Der an dem Hebel 506 vorgesehene Feststellstift 512 schwenkt dann den Verriegelungsnocken 492 derart nach oben, daß er eine Rolle 518 erfassen kann, die an der Verbindung des Schwenkarms 470 mit dem zweiten Hebel 482 vorgesehen ist. Dabei kommt die Rolle 518 gegen die Nockenfläche 502 zur Anlage, wenn das Fahrzeug vorwärts fährt. Bei Rückwärtsfahrt kommt eine Nockenfläche 503 an dem sich entgegen dem Uhrzeigerdrehsinn drehenden Verriegelungsnocken 492 mit der Rolle 518 zur Anlage. Beim Bremsen wird also durch das Erfassen der Rolle durch den Hakenteil 496 das Getriebe in die Neutrallage zurückgestellt, da die Rolle 518 letztlich vollständig in die Öffnung 504 eintritt.

Über den einstellbaren Zapfen 494 kann eine genaue Ausrichtung des Verriegelungsnockens 492 erreicht werden, wenn sich das Getriebe in seiner Neutrallage befindet. Der Feststellhebel 514 dient dazu, die Bremsen in ihrer angezogenen Stellung festzuhalten. In dieser Stellung erfaßt der Hakenteil 516 am Feststellhebel 514 den Feststellstift 512, so daß der Verriegelungsnocken 492 die Rolle 518 definitiv hält und ein Verstellen des Gestänges des Pedalsystems in dieser Stellung des Verriegelungsnockens ausgeschlossen ist.

Ein bei angelegter Bremse ansprechender nicht dargestellter Schalter ist mit einem ebenfalls nicht gezeigten Sitzschalter verbunden, um die Anwesenheit eines sich auf dem Sitz befindlichen Fahrers dem elektrischen System anzuzeigen, damit der Motor automatisch abgestellt wird, wenn der Fahrer seinen Sitz bei laufendem Motor verläßt und die Parkbremse nicht angelegt hat. Mit angelegter Parkbremse und bei laufendem Motor kann die Bedienungsperson jedoch das Fahrzeug verlassen, und infolge des die Rolle 518 erfassenden Verriegelungsnockens ist dann aber ein ungewolltes Fahren ausgeschlossen und ein weiteres Sicherheitsmerkmal gegeben.

Aus dem Vorstehenden geht ebenfalls hervor, daß der Feststellstift 512 eine doppelte Funktion erfüllt. Zunächst wird er dazu benutzt, um den Verriegelungsnocken 492 mit der Rolle 518 in Eingriff zu bringen, wobei die Pedale für Vorwärts- und Rückwärtsfahrt in ihre Ruhestellung zurückgeführt werden, sofern sie sich nicht dort bereits befinden sollten, und als besonders wichtiger Faktor in ihrer Ruhestellung festgesetzt werden. Diese zweite Funktion des Feststellstiftes wird dadurch erreicht, daß er bei betätigter Parkbremse von dem Feststellhebel 514 erfaßt wird.

Bei eingerückter Parkbremse und bei laufendem Motor kann sich das Fahrzeug damit auch bei einem unbeabsichtigten Betätigen eines der Pedale für Vorwärtsfahrt oder Rückwärtsfahrt nicht bewegen. Dieses Sicherheitsmerkmal wird mit einem Minimum an neuen Teilen erreicht, da sowieso vorhandene Teile in die neue Steuereinrichtung weitgehend miteinbezogen wurden.

## Patentansprüche

1. Steuereinrichtung mit zwei verschwenkbaren Pedalen (58, 114, 270, 272, 458, 474) zum Verstellen eines Fahrzeuggetriebes aus einer Neutrallage, in der die Pedale (58, 114, 270, 272, 458, 474) sich in ihrer Ruhestellung befinden, in eine Antriebsdrehrichtung für Vorwärtsfahrt und in eine Antriebsdrehrichtung für Rückwartsfahrt, wobei das das Fahrzeuggetriebe in die Drehrichtung für Vorwärtsfahrt schaltende Pedal (58, 270, 458) aus seiner Ruhestellung durch Heruntertreten um eine erste horizontale Welle (62, 274, 462) in Vorwärtsfahrtrichtung von rechts gesehen im Uhrzeigerdrehsinn verschwenkbar ist, dadurch gekennzeichnet, daß das das Fahrzeuggetriebe in die Drehrichtung für Rückwärtsfahrt schaltende Pedal (114, 272, 474) aus seiner Ruhestellung durch Heruntertreten um eine zweite horizontale Welle (112, 276, 476) im umgekehrten Drehsinn verschwenkbar ist, so daß der Fuß der Bedienungsperson für Vor- bzw. Rückwärtsfahrt unterschiedliche Bewegungsabläufe beschreiben muß.

2. Steuereinrichtung nach Anspruch 1, dadurch gekennzeichnet, daß die erste Welle (62, 274, 462) mit Längsabstand zur zweiten Welle (112, 276, 476) angeordnet ist, wobei die erste Welle (62, 274, 462) am rückwärtigen Ende ihres zugehörigen Pedals (58, 270, 458) oder rückwärtig dieses Pedals (58, 270, 458) und die zweite Welle (112, 276, 476) am frontseitigen Ende ihres zugehörigen Pedals (114, 272, 474) oder vor diesem Pedal (114, 272, 474) angeordnet ist.

3. Steuereinrichtung nach Anspruch 1 oder 2 für ein Fahrzeug mit einem Sitz (232, 422) für die Bedienungsperson, dadurch gekennzeichnet, daß in Fahrzeuglängsrichtung gesehen das das Fahrzeuggetriebe in die Drehrichtung für Vorwärtsfahrt schaltende Pedal (58, 270, 458) vor dem das Fahrzeuggetriebe in die Drehrichtung für Rückwärtsfahrt schaltenden Pedal (114, 272, 474) angeordnet ist.

4. Steuereinrichtung nach Anspruch 1, 2 oder 3, dadurch gekennzeichnet, daß auf einer Fußstütze (104) für die Bedienungsperson ein aufrechtstehender Bügel (110) vorgesehen ist, der an seinem oberen Ende eine Welle (112) mit einer an ihr einenends angeschlossenen, entgegen dem Uhrzeigerdrehsinn schwenkbaren Pedaltretfläche aufnimmt, wobei ein verbindungsteil (108) zum Schalten des Fahrzeuggetriebes in seine Drehrichtung für Rückwärtsfahrt durch die Fußstütze (104) durchtritt und mit der Pedaltretfläche in Wirkverbindung steht.

5. Steuereinrichtung nach Anspruch 4, dadurch gekennzeichnet, daß der Verbindungsteil (108) gegen die Unterseite der Pedaltretfläche anliegt und durch ein Langloch (106) in der Fußstütze (104) durchtritt.

6. Steuereinrichtung nach Anspruch 1, 2 oder 3, dadurch gekennzeichnet, daß an einen vertikal schwenkbaren Schwenkarm (282, 470) das Pedal (270, 458) zum Schalten des Fahrzeuggetriebes in seine Drehrichtung für Vorwärtsfahrt mittel- oder unmittelbar, oberhalb dieser Anschlußstelle eine zum Fahrzeuggetriebe führende Verbindungsstange (286) oder dergleichen an den Schwenkarm (282, 470) und zwischen diesen Anschlußstellen ein Hebel (300, 482) an den Schwenkarm (282, 470) angeschlossen sind, wobei dieser Hebel (300, 482) an seinem anderen Ende über einen weiteren Hebel (298, 478) mit einer Welle (276, 476) verbunden ist, die das Pedal (272, 474) zum Schalten des Fahrzeuggetriebes in seine Drehrichtung für Rückwärtsfahrt drehfest aufnimmt.

7. Steuereinrichtung nach Anspruch 6, dadurch gekennzeichnet, daß die mit dem weiteren Hebel (298, 478) drehfest verbundene Welle (276, 476) an dem frontseitigen Ende des Pedals (272, 474) zum Schalten des Fahrzeuggetriebes in seine Drehrichtung für Rückwärtsfahrt vorgesehen und in den an den Schwenkarm (282, 470) angeschlossenen Hebel (300, 482) zur Aufnahme des weiteren Hebels (298, 478) ein Langloch eingearbeitet ist.

8. Steuereinrichtung nach Anspruch 6 oder 7, dadurch gekennzeichnet, daß an den an den Schwenkarm (282, 470) angeschlossenen Hebel (300, 482) eine Feder (308) angeschlossen ist, die anderenends an einer den Schwenkarm (282, 470) lagernden horizontalen Welle (274, 462) angreift.

9. Steuereinrichtung nach einem oder mehreren der vorherigen Ansprüche, dadurch gekennzeichnet, daß der Schwenkarm (470) bei Betätigung der Fahrzeugbremse (434) und/oder einer Parksperre (436) in eine Stellung verschwenkbar ist, in der das Fahrzeuggetriebe über die an ihm angreifende Verbindungsstange (286) oder dergleichen in seine Neutrallage verstellt wird.

10. Steuereinrichtung nach Anspruch 9, dadurch gekennzeichnet, daß ein bei Betätigung der Fahrzeugbremse (434) hochschwenkbarer Verriegelungsnocken (492) vorgesehen ist, der an seinem seiner Lagerstelle (Zapfen 494) abgelegenen Ende einen Hakenteil (496) aufweist, der derart ausgebildet ist, daß er in jeder Lage des Schwenkarms (470) ein an diesem vorgesehenes Gegenteil (Rolle 518) erfassen kann und den Schwenkarm (470) in seine das Fahrzeuggetriebe in seine Neutrallage schaltende Stellung zurückführt.

11. Steuereinrichtung nach Anspruch 10, dadurch gekennzeichnet, daß der Verriegelungsnocken (492) in einer Stellung, in der er den Schwenkarm (470) in seine das Fahrzeuggetriebe in die Neutrallage schaltende Stellung zurückgeführt hat, von einem Feststellhebel (514) erfaßbar ist, der in Abhängigkeit von der Betätigung der Parksperre (436) verschwenkbar ist.

## Claims

1. Control device with two pivotable pedals (58,114,270,272,458,474) for shifting a vehicle transmission out of a neutral position, in which the pedals (58,114,270,272,458,474) are in their inoperative position, into a rotational drive direction for forward travel and into a rotational drive direction for reverse travel, the pedal (58,270,458) shifting the vehicle transmission into the rotational drive direction for forward travel being pivotable about a first horizontal shaft (62,274,462), seen from the right in the forward drive direction, in a clockwise direction, characterised in that the pedal (114,272,474) shifting the vehicle transmission into its rotational direction for reverse travel is pivotable out of its inoperative position by depression about a second horizontal shaft (112,276,476) in the opposite rotational direction, so that the driver's foot must execute different sequences of movements for forward or reverse travel.

2. Control device according to claim 1, characterised in that the first shaft (62,274,462) is located at a longitudinal spacing from the second shaft (112,276,476), the first shaft (62,274,476) being located at the rear end of its associated pedal (58,270,458), or to the rear of this pedal (58,270,458), and the second shaft (112,276,476) is located at the frontal end of its associated pedal (114,272,474) or in front of this pedal (114,272,474).

3. Control device according to claim 1 or 2 for a vehicle with a seat (232,422) for the driver, characterised in that, seen in the longitudinal direction of the vehicle, the pedal (58,270,458) shifting the vehicle transmission into the rotational direction for forward travel is located in front of the pedal (114,272,474) shifting the vehicle transmission into the rotational direction for reverse travel.

4. Control device according to claim 1, 2 or 3, characterised in that there is provided on a footrest (104) for the driver an upright bracket (110) which accommodates at its upper end a shaft (112) with a pedal foot surface connected at one end thereof and pivotable in an anticlockwise direction, a connecting portion (108) for shifting the vehicle transmission into its rotational direction for reverse travel passing through the footrest (104) and being in effective connection with the pedal foot surface.

5. Control device according to claim 4, characterised in that the connecting portion (108) bears against the underside of the pedal foot surface, and passes through a slot (106) in the footrest (104).

6. Control device according to claim 1, 2 or 3, characterized in that the pedal (270,458) for shifting the vehicle transmission into its rotational direction for forward travel is connected directly or indirectly, to a vertically-pivotable pivot arm (282,470), in that above this point of connection a connecting rod (286) or the like leading to the vehicle transmission is connected to the pivot arm (282,470), and in that between these points of connection a lever (300,482) is connected to the pivot arm (282,470), said lever (300,482) being connected at its other end via a further lever (298,478) to a shaft (276,476), which non-rotatably accommodates the pedal (272,474) shifting the vehicle transmission into its rotational direction for reverse travel.

7. Control device according to claim 6, characterised in that the shaft (276,476) non-rotatably connected to the further lever (298,478) is provided on the frontal end of the pedal (272,474) shifting the vehicle transmission into its rotational direction for reverse travel, and in that a slot is provided in the lever (300,482) connected to the pivot arm (282,470) in order to accommodate the further lever (298,478).

8. Control device according to claim 6 or 7, characterised in that there is connected to the lever (300,482) linked to the pivot arm (282,470) a spring (308) which engages at the other end on a horizontal shaft (274,462) accommodating the pivot arm (282,470).

9. Control device according to one or more of the foregoing claims, characterised in that, upon actuation of the vehicle brake (434) and/or of a parking brake (436), the pivot arm (470) is pivotable into a position in which the vehicle transmission is shifted into its neutral position via the connecting rod (286) or the like engaging thereon,

10. Control device according to claim 9, characterised in that there is provided a locking cam (492) which is pivotable upwards upon actuation of the vehicle brake (434), and which, on its end remote from its bearing point (pin 494), has a hook portion (496), which is so formed that, in every position of the pivot arm (470), it can grasp a counterpart (roller 518) provided on said pivot arm (470), and returns the latter into its position shifting the vehicle transmission into its neutral position.

11. Control device according to claim 10, characterised in that the locking cam (492), in a position in which it has returned the pivot arm (470) into its position shifting the vehicle transmission into its neutral position, can be grasped by a securing lever (514) which is pivotable in dependence on the actuation of the parking brake (436).

## Revendications

1. Appareil de commande, avec deux pédales pivotantes (58, 114, 270, 272, 458, 474) pour déplacer une transmission de véhicule, à partir d'une position neutre dans laquelle les pédales (58, 114, 270, 272, 458, 474) se trouvent dans leur position de repos, dans une direction de rotation d'entraînement pour la marche avant et dans une direction de rotation d'entraînement pour la marche arrière, la pédale (58, 270, 458) enclenchant la transmission du véhicule dans la direction de rotation pour la marche avant pouvant, en l'enfonçant à partir de sa position de repos, être pivotée, vue de la droite dans la direction de marche avant, dans le sens de rotation d'horloge autour d'un premier arbre horizontal (62, 274, 462), **caractérisé** en ce que la pédale (114, 272, 474) enclenchant la transmission du véhicule dans la direction de rotation pour la marche arrière peut, en l'enfonçant à partir de sa position de repos, être pivotée dans le sens de rotation inverse autour d'un second arbre horizontal (112, 276, 476), de sorte que le pied du conducteur doit décrire des trajectoires de déplacement différentes pour la marche avant et pour la marche arrière.

2. Appareil de commande selon la revendication 1, **caractérisé** en ce que le premier arbre (62, 274, 462) est disposé à distance longitudinale du second arbre (112, 276, 476), le premier arbre (62, 274, 462) étant disposé à l'extrémité arrière de sa pédale associée (58, 270, 458) ou en arrière de cette pédale (58, 270, 458), et le second arbre (112, 276, 476) étant disposé à l'extrémité avant de sa pédale associée (114, 272, 474) ou en avant de cette pédale (114, 272, 474).

3. Appareil de commande selon la revendication 1 ou 2, pour un véhicule avec un siège (232, 422) pour le conducteur, **caractérisé** en ce que, vue dans la direction longitudinale du véhicule, la pédale (58, 270, 458) enclenchant la transmission du véhicule dans la direction de rotation pour la marche avant est disposée avant la pédale (114, 272, 474) enclenchant la transmission du véhicule dans la direction de rotation pour la marche arrière.

4. Appareil de commande selon la revendication 1, 2 ou 3, **caractérisé** en ce qu'est prévu, sur un repose-pied (104) pour le conducteur, un étrier posé debout (110) qui reçoit, à son extrémité supérieure, un arbre (112) auquel est raccordé par une extrémité une surface d'enfoncement de pédale pouvant pivoter dans le sens inverse d'horloge, une pièce de liaison (108), pour l'enclenchement de la transmission du véhicule dans sa direction de rotation pour la marche avant, traversant le repose-pied (104) et étant reliée fonctionnellement à la surface d'enfoncement de pédale.

5. Appareil de commande selon la revendication 4, **caractérisé** en ce que la pièce de liaison (108) s'applique contre le dessous de la surface d'enfoncement de pédale et passe par un trou oblong (106) pratiqué dans le repose-pied (104).

6. Appareil de commande selon la revendication 1, 2 ou 3, **caractérisé** en ce que la pédale (270, 458) pour l'enclenchement de la transmission du véhicule dans sa direction de rotation pour la marche avant est raccordée directement ou indirectement à un bras pivotant (282, 470) pouvant pivoter verticalement, tandis qu'une tringle de liaison (286) ou similaire, menant à la transmission du véhicule, est raccordée au bras pivotant (282, 470) au-dessus du point de raccordement de la pédale, et qu'un levier (300, 482) est raccordé au bras pivotant (282, 470) entre les deux points de raccordement précités, ce levier (300, 482) étant relié à son autre extrémité, par l'intermédiaire d'un autre levier (298, 478), à un arbre (276, 476) qui reçoit en fixité de rotation la pédale (272, 474) pour l'enclenchement de la transmission du véhicule dans sa direction de rotation pour la marche arrière.

7. Appareil de commande selon la revendication 6, **caractérisé** en ce que l'arbre (276, 476), assemblé en fixité de rotation à l'autre levier (298, 478), est prévu à l'extrémité avant de la pédale (272, 474) pour l'enclenchement de la transmission du véhicule dans sa direction de rotation pour la marche arrière, et un trou oblong est, afin de recevoir l'autre levier (298, 478), pratiqué dans le levier (300, 482) raccordé au bras pivotant (282, 470).

8. Appareil de commande selon la revendication 6 ou 7, **caractérisé** en ce qu'un ressort (308) est raccordé au levier (300, 482) raccordé au bras pivotant (282, 470), l'autre extrémité du ressort agissant sur un arbre horizontal (274, 462) recevant le bras pivotant (282, 470).

9. Appareil de commande selon l'une ou plusieurs des revendications précédentes, **caractérisé** en ce que le bras pivotant (470) peut, lors de l'actionnement du système de freinage (434) du véhicule et/ou d'un système de verrouillage de stationnement (436), être pivoté dans une position dans laquelle la transmission du véhicule est déplacée dans sa position neutre par l'intermédiaire de la tringle de liaison (286) ou similaire qui agit sur elle.

10. Appareil de commande selon la revendication 9, **caractérisé** en ce qu'est prévue une came de verrouillage (492), qui peut être relevée par pivotement lors de l'actionnement du système de freinage (434) du véhicule et qui présente, à son extrémité éloignée de son point de montage (pivot 494), une partie en crochet (496) qui est conçue de telle sorte que, dans chaque position du bras pivotant (470), elle peut saisir une pièce complémentoire (galet 518) prévue sur ce dernier, et elle ramène le bras pivotant (470) dans sa position enclenchant la transmission du véhicule dans sa position neutre.

11. Appareil de commande selon la revendication 10, **caractérisé** en ce que la came de verrouillage (492), dans une position dans laquelle elle a ramené le bras pivotant (470) dans sa position enclenchant la transmission du véhicule dans la position neutre, peut être saisie par un levier de blocage (514), qui peut être pivoté en fonction de l'actionnement du système de verrouillage de stationnement (436).
